# EUROPÄISCHE PATENTSCHRIFT

(11) **EP 1 103 425 B1**
(45) Veröffentlichungstag und Bekanntmachung des Hinweises auf die Patenterteilung: **18.06.2003**
(21) Anmeldenummer: 00124952.3
(22) Anmeldetag: 16.11.2000
(51) Int. Cl.: B60R 13/04, B60J 10/10, B60J 1/18

(54) **Verdeck eines Fahrzeugs**
Vehicle top
Capote pour voiture

(30) Priorität: 23.11.1999 DE 19956330
(43) Veröffentlichungstag der Anmeldung: 30.05.2001
(73) Patentinhaber: Webasto Vehicle Systems International GmbH, 82131 Stockdorf (DE)
(72) Erfinder: Schütt, Thomas, 82256 Fürstenfeldbruck (DE)
(74) Vertreter: Wiese, Gerhard

(56) Entgegenhaltungen:
- EP-A- 0 284 931
- EP-A- 0 294 128
- DE-A- 19 642 648
- DE-C- 19 628 107
- DE-C- 19 724 592

## Beschreibung

Die Erfindung betrifft ein Verdeck eines Fahrzeuges mit einem Verdeckstoff und einer in einem Ausschnitt des Verdeckstoffes angeordneten Scheibe aus Kunststoff.

In der DE 197 24 592 C1 ist ein Verdeck für ein Kraftfahrzeug beschrieben, bei dem ein Verdeckflächenelement mit einem zweiten Verdeckflächenelement, das in einem Ausführungsbeispiel eine Verdeck- oder Heckscheibe ist, mittels eines streifenförmigen PUR-Gießharzelements verbunden ist. Die beiden Verdeckflächenelemente können gemäß einem Ausführungsbeispiel mit einem Gewebeoder Geflechtstreifen miteinander verbunden sein, der mit den Rändern der beiden Verdeckflächenelemente vernäht oder verklebt ist.

Aufgabe der Erfindung ist es, ein eingangs genanntes Verdeck zu schaffen, bei dem die Scheibe aus Kunststoff an dem Verdeckstoff mit weniger Montageaufwand befestigt werden kann.

Diese Aufgabe wird bei dem oben genannten Verdeck erfindungsgemäß dadurch gelöst, daß in einem Randbereich der Scheibe ein den Ausschnitt begrenzender Stoffrand des Verdeckstoffes oder eine mit dem Verdeckstoff verbundene Befestigungseinrichtung fest eingeformt ist. Bei dieser Verbindung zwischen dem Verdeck und der Scheibe wird somit eine innige, feste und dichte Befestigung des Verdeckstoffes in dem Kunststoffmaterial der Scheibe erzielt im Gegensatz zu den bekannten Scheibenbefestigungen, bei denen die Scheibe mit dem Verdeckstoff verklebt oder über ein zusätzlich an die vorhandene Scheibe angespritzes Verbindungsteil verbunden wird. Während bei diesen bekannten Scheibenbefestigungen zumindest ein zusätzlicher Arbeitsgang erforderlich ist, entfällt dieser zusätzliche Arbeitsgang bei dem erfindungsgemäß vorgeschlagenen Verdeck, bei dem die Scheibe vorzugsweise in einem Gieß- oder Spritzgußverfahren aus einem klaren Kunststoff hergestellt wird. Bei der Herstellung der Scheibe wird der Stoffrand des für den Ausschnitt zugeschnittenen Verdeckstoffes in die Gießform eingelegt, so daß der Stoffrand von dem Kunststoff umgossen oder umspritzt wird und diesen dicht und fest hält. Durch dieses fest umschließende Einbetten des Stoffrandes in dem Material der Scheibe genügt es schon, wenn nur ein vergleichsweise schmaler Stoffrand eingebettet wird, wodurch ein größerer Durchsichtbereich der Scheibe gegenüber herkömmlichen Scheibenbefestigungen erreicht wird. Da der eingebettete Verdeckstoff unmittelbar um den Rand oder die Außenkante der Scheibe umgebogen werden kann, wird auch weniger Ablageraum für die Scheibe beim Öffnen des Verdecks und beim Ablegen der Scheibe benötigt. Durch eine entsprechend gestaltete, abgerundete Außenkante der Scheibe ergibt sich auch ein günstiges Knickverhalten des Verdeckstoffes an seiner Einbettung oder Umgießung in der Scheibe. Diese Ausführungen gelten ebenso für die alternative Gestaltung, bei der eine mit dem Verdeckstoff verbundene Befestigungseinrichtung fest eingeformt ist.

Vorteilhafte Ausgestaltungen der Erfindung sind in den Unteransprüchen angegeben.

Diese erfindungsgemäße Art der Befestigung eignet sich sowohl für feste wie auch für flexible Kunststoffscheiben eines Verdecks, insbesondere für eine Heckscheibe, wobei das Verdeck beispielsweise ein Faltdach eines Cabriolets oder auch ein festes Stoffverdeck sein kann.

Zweckmäßigerweise ist der Randabschnitt der Scheibe verdickt gebildet, so daß unabhängig von der Scheibendicke eine ausreichende Verankerung und Einbettung des Verdeckstoffes oder einer Befestigungseinrichtung oder auch eines zusätzlichen Befestigungs- oder Einlegeteils möglich ist.

Vorzugsweise ist die Verdickung am Randabschnitt der Scheibe einseitig zur Scheibeninnenseite hin gebildet, kann aber auch zur Scheibenaußenseite hin oder beidseitig gebildet sein. Dabei kann der Stoffrand derart im Randbereich der Scheibe eingebettet sein, daß der Verdeckstoff bündig zur Scheibenaußenseite, oberhalb der Scheibenaußenseite oder von der Scheibenaußenseite zurückgesetzt angeordnet ist.

Wenn im Randbereich der Scheibe ein Verstärkungsrahmen eingebettet ist, erhält auch eine dünne Scheibe eine größere Steifigkeit.

Zweckmäßigerweise kann im Randbereich der Scheibe zumindest ein aus dem Randbereich herausragendes Einlegeteil eingebettet sein, an dem ein weiteres Mechanikteil des Verdecks befestigt sein kann. Statt eines oder mehrerer einzelner Einlegeteile kann dies auch ein rahmenförmiges Teil sein.

Vorzugsweise ist die Befestigungseinrichtung ein Reißverschluß, dessen eine Hälfte in der Scheibe eingebettet ist und dessen andere Hälfte mit dem Verdeckstoff verbunden ist. Auf diese Weise kann die Scheibe ohne großen Aufwand ausgewechselt werden.

Eine alternative Gestaltung sieht vor, daß die Befestigungseinrichtung ein Rahmen, insbesondere ein Stoffrahmen, ist, an dem ein Reißverschluß befestigt ist. Die Scheibe kann aus einem 2-Komponenten-Spritzguß hergestellt sein, der zwei unterschiedliche Komponenten oder Materialien aufweist. Damit lassen sich an der Scheibe Bereiche mit unterschiedlichen Eigenschaften wie z.B. unterschiedlicher Färbung insbesondere im Randbereich der Scheibe herstellen. Andererseits kann der 2-Komponenten-Spritzguß auch zwei gleiche Komponenten oder Materialien mit unterschiedlichen Färbungen enthalten.

Nachfolgend werden Ausführungsbeispiele der Erfindung unter Bezugnahme auf Zeichnungen näher erläutert. Es zeigen:
- Fig. 1 bis 9: in einer Schnittansicht in Teildarstellung unterschiedliche Ausführungsbeispiele eines Verdecks, bei denen ein Verdeckstoff fest in eine Scheibe des Verdecks eingebettet ist; und
- Fig. 10 bis 15: in einer Schnittansicht in Teildarstellung weitere Ausführungsbeispiele des Verdecks, bei denen eine Befestigungseinrichtung in der Scheibe des Verdecks eingebettet ist, wobei an der Befestigungseinrichtung der Verdeckstoff festgelegt ist.

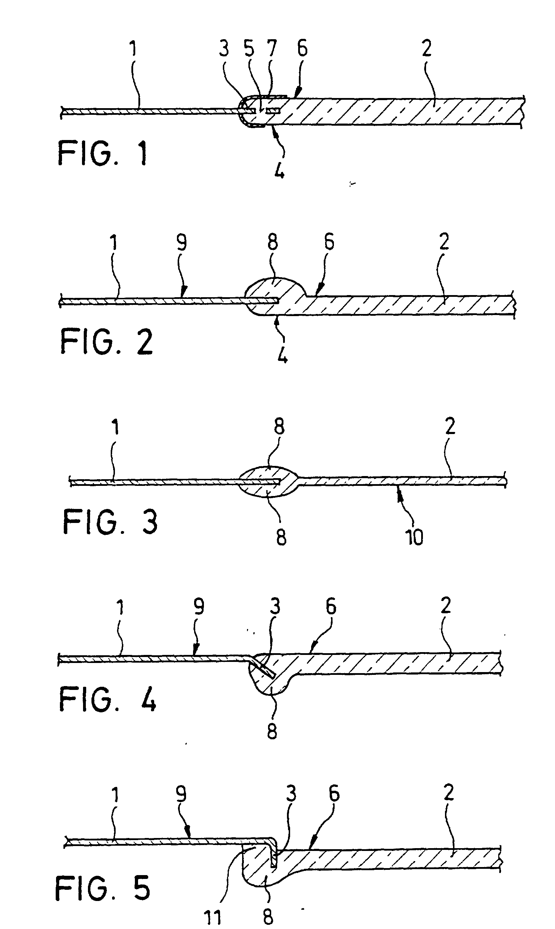

Ein Faltverdeck für ein Cabriolet enthält einen Verdeckstoff 1 und eine aus Kunststoff hergestellte Scheibe 2, die beispielsweise eine Heckscheibe ist. Die Scheibe 2 ist in einem an die Scheibe 2 angepaßten Ausschnitt im Verdeckstoff 1 angeordnet. Bei der Herstellung der Scheibe 2 wird der Verdeckstoff 1 mit seinem den Ausschnitt begrenzenden Stoffrand 3 in eine Gießform derart eingelegt, daß der Stoffrand 3 in einen Randabschnitt 4 der Scheibe 2 eingegossen und vom Kunststoffmaterial der Scheibe 2 fest umschlossen gehalten wird. Auf diese Weise ist eine dauerhafte und dichte Verbindung mit dem Verdeckstoff 1 geschaffen. Bei dem in Fig. 1 dargestellten Ausführungsbeispiel sind z. B. lochartig geformte Ausstanzungen 5 entlang dem Stoffrand 3 ausgebildet, in die das Kunststoffmaterial der Scheibe 2 eindringt, wodurch eine erhöhte Festigkeit der Verbindung erzielt wird. Der Stoffrand 3 ist in etwa in der Mittelebene der Scheibe 2, die beispielsweise eine vergleichsweise dicke und starre Scheibe aus Hartkunststoff ist, eingebettet, so daß die Außenseite 6 der Scheibe 2 (die obere Seite gemäß Fig. 1) bei geschlossenem Verdeck gegenüber dem Verdeckstoff 1 erhöht angeordnet ist ("overflush"). Beim Öffnen des Verdecks kann der Verdeckstoff 1 direkt an dem Randabschnitt 4 der Scheibe 2, der abgerundet gebildet sein kann, umgebogen werden, falls die Verdeckfaltung dies vorsieht. Auf der Scheibenaußenseite 6 kann über dem Bereich des Stoffrandes 3 eine Abdeckung 7 aufgebracht sein, z. B. eine schwarze Beschichtung oder ein Aufdruck, um den eingebetteten Stoffrand 3 optisch abzudecken.

Die in Fig. 2 dargestellte Scheibe 2 enthält im Bereich ihres Randabschnittes 4 eine rahmenartige, umlaufende Verdickung 8, die einseitig an der Außenseite 6 der Scheibe 2 ausgebildet ist. Der Stoffrand 3 ist derart in dem Randabschnitt 4 der Scheibe 2 eingebettet, daß die Stoffoberseite 9 in etwa auf der Höhe der Scheibenaußenseite 6 angeordnet ist ("flush"). Diese Anordnung des Stoffrandes 3 kann auch bei dünneren Scheiben 2 verwendet werden.

Fig. 3 zeigt eine dünnere, weiche Scheibe 2, bei der die Verdickung 8 am Randabschnitt 4 beidseitig, d. h. sowohl zur Scheibenaußenseite 6 wie auch zur Scheibeninnenseite 10 hin ausgebildet ist. Die Verdickung 8 kann sowohl symmetrisch wie auch mit beidseits unterschiedlich starken Ausbauchungen ausgeführt sein.

Die in Fig. 4 dargestellte Scheibe 2 enthält eine innenseitig ausgebildete rahmenartige Verdickung 8, in die der Stoffrand 3 unter einem Winkel zur Scheibenaußenseite 6 derart eingebettet ist, daß die Stoffoberseite 9 bündig mit der Scheibenaußenseite 6 abschließt ("flush").

Die in Fig. 5 dargestellte Scheibe 2 enthält einen Randabschnitt 4 mit einer innenseitigen Verdickung 8 und einer flachen Erhöhung 11, die über die Scheibenaußenseite 6 hinaussteht. Der Stoffrand 3 ist scheibeneinwärts hinter der Erhöhung 11 in etwa vertikal zur Scheibenaußenseite 6 in der Verdickung 8 eingebettet, so daß der Verdeckstoff 1 auf der Erhöhung 11 anliegt (Scheibenaußenseite 6 zur Stoffoberseite 9 "underflush"). Eine vergleichbare Befestigung des Stoffrandes 3 ist auch bei einer ohne eine Erhöhung gebildeten Verdickung 8 möglich.

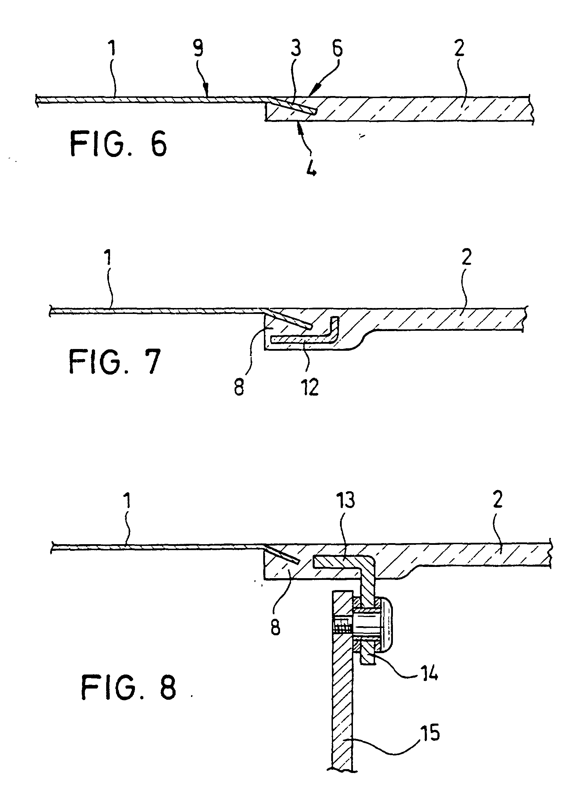

Bei der in Fig. 6 dargestellten Scheibe 2 ist der Stoffrand 3 ähnlich dem Beispiel der Fig. 4 unter einem Winkel in dem Randabschnitt 4 eingebettet, jedoch erstreckt sich der Stoffrand 3 unter flacherem Winkel in den unverdickten Randabschnitt 4 der Scheibe 2. Die Stoffoberseite 9 schließt ebenfalls bündig mit der Scheibenaußenseite 6 ab ("flush").

Die in Fig. 7 dargestellte Scheibe 2 enthält einen Randabschnitt 4 mit einer innenseitigen Verdickung 8 und einem in der Verdickung 8 vollständig eingebetteten Verstärkungsrahmen 12, der beispielsweise ein Aluminiumprofil ist. Der Stoffrand 3 ist vergleichbar dem in Fig. 6 dargestellten Beispiel in der Scheibe 2 eingebettet.

Bei dem in Fig. 8 dargestellten Ausführungsbeispiel ist in der Verdickung 8, die beispielsweise innenseitig ausgeführt ist, ein Einlegeteil 13 verankert, das einen aus der Scheibeninnenseite 10 nach innen herausragenden Befestigungsabschnitt 14 enthält. An diesem Befestigungsabschnitt 14 können Mechanikteile des Verdeckes wie z. B. ein Scharnier 15 befestigt sein.

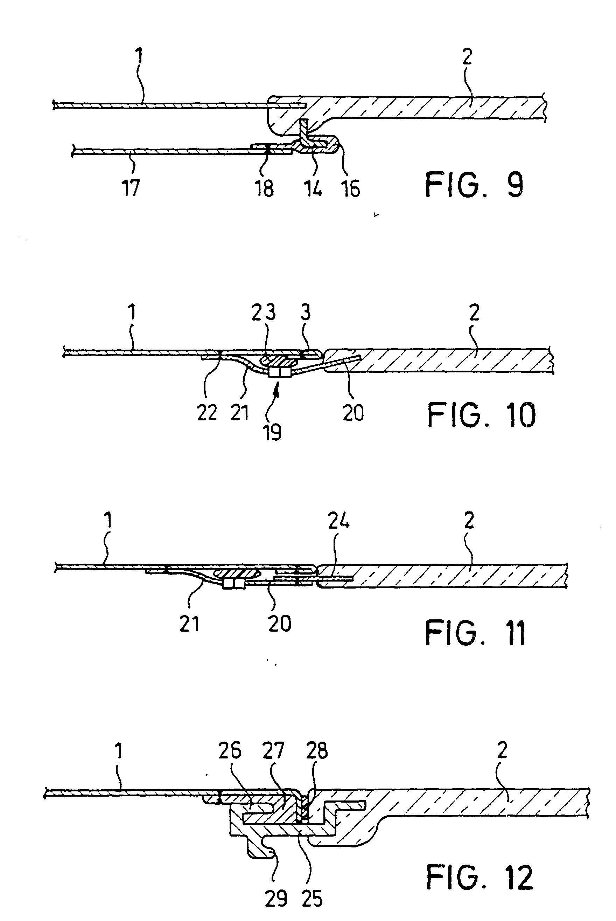

Fig. 9 zeigt ein Ausführungsbeispiel, bei dem die Scheibe 2 eine innenseitige Verdickung 8 aufweist, in der ein rahmenartiges Einlegeteil 14 verankert ist, an dem ein an das Einlegeteil 14 passend geformtes Profilteil 16 befestigt ist, das wiederum mit einem weiteren Verdeckteil wie z. B. einem Innenhimmel 17 z. B. durch eine Naht 18 verbunden ist. Statt des rahmenartigen Einlegeteils 14 können auch mehrere einzelne Einlegeteile 14 in der Verdickung 8 verankert sein.

Die voranstehend beschriebenen Ausführungsbeispiele können sowohl mit festen Scheiben (z. B. aus Polycarbonat) wie auch mit flexiblen Scheiben (z. B. aus transparentem Weich-PVC) sowie in unterschiedlichen Kombinationen von einund zweiseitigen Verdickungen und den unterschiedlichen Einbettungen des Stoffrandes 3 ausgeführt werden.

Bei den folgenden Ausführungsbeispielen ist nicht der Verdeckstoff 1 in die Scheibe 2 eingebettet, sondern eine Befestigungseinrichtung 19, an der wiederum der Verdeckstoff 1 direkt oder indirekt befestigt ist. Die Befestigungseinrichtung 19 ist z. B. ein Reißverschluß (siehe Fig. 10), dessen eine Reißverschlußhälfte 20 in der Scheibe 2 eingebettet ist und dessen andere Reißverschlußhälfte 21 durch eine Naht 22 mit dem Verdeckstoff 1 verbunden ist. Der Stoffrand 3 ist umgeschlagen und vernäht. Eine zwischen dem Verdeckstoff 1 und dem Reißverschluß eingelegte Dichtung 23 dichtet den Reißverschluß 20, 21 ab. Durch diese Gestaltung kann die Scheibe 2 ohne großen Montageaufwand ausgetauscht werden.

Bei dem Ausführungsbeispiel der Fig. 11 ist ein Stoffrahmen 24 als Befestigungseinrichtung in der Scheibe 2 integriert, an dem wiederum die eine Reißverschlußhälfte befestigt ist. Ansonsten gleicht diese Ausführungsform der zu Fig. 10 beschriebenen Ausführungsform.

Bei dem Ausführungsbeispiel der Fig. 12 ist ein Rahmen wie z. B. ein Aluprofil 25 als Befestigungseinrichtung in der Scheibe 2 integriert. An einem freien Schenkel 26 des Aluprofils 25 ist ein Kederprofil 27 lösbar angebracht, an dem wiederum der Verdeckstoff 1 fest angebracht ist. Eine Dichtung 28 ist in den Spalt zwischen dem einwärts umgebogenen Stoffrand 3 und der Verdickung 8 der Scheibe 2 eingelegt. An dem Aluprofil 25 kann eine hakenartige Nase 29 ausgebildet sein, an der ein Innenhimmel (nicht dargestellt) befestigt werden kann.

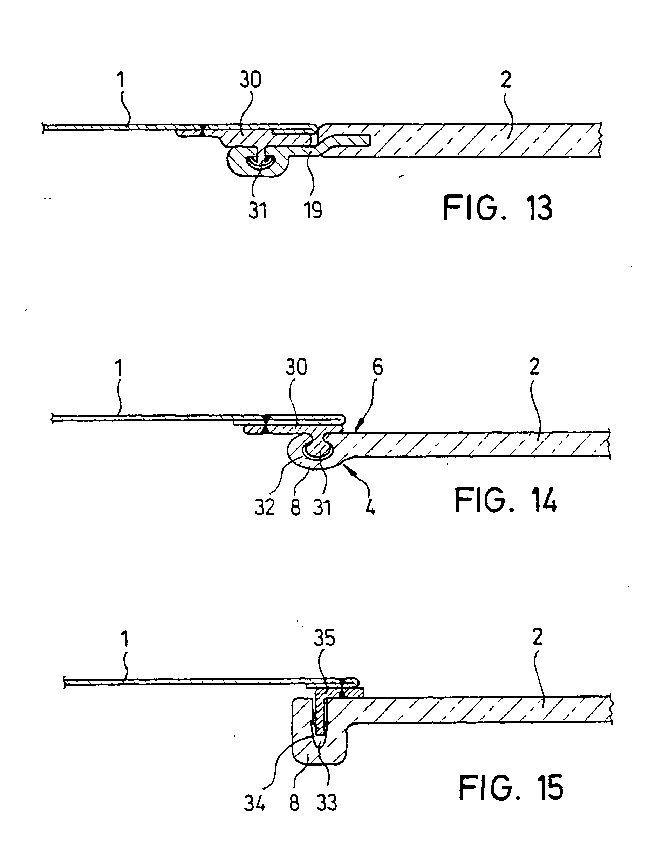

Ein ähnliches Ausführungsbeispiel zeigt Fig. 13. Hier ist an dem Verdeckstoff 1 ein Profilelement 30 befestigt, das z. B. pilzartige Clips 31 zum lösbaren Eingriff mit einer in der Scheibe 2 verankerten und als Rahmen gebildeten Befestigungseinrichtung 19 aufweist.

Fig. 14 zeigt eine Scheibe 2, die an ihrem Randabschnitt 4 eine Verdickung 8 mit einer rinnenartigen, eine Hinterschneidung aufweisenden und sich zur Scheibenaußenseite 6 öffnenden Vertiefung 32 aufweist, die entweder beim Gießen der Scheibe 2 eingeformt wird oder nachträglich z. B. durch Fräsen hergestellt wird. In die Vertiefung 32 sind Clips 31 eines Profilelements 30 eingedrückt.

Fig. 15 zeigt schließlich eine Scheibe 2 mit einer innenseitigen Verdickung 8, die eine nach außen weisende Öffnung 33 in Form einzelner Bohrungen oder eines durchgehenden Schlitzes aufweist. In diese Öffnung 33 ist eine jeweilige Federblechklammer 34 eines Winkelprofilstreifens 35 lösbar eingesetzt, an dem der Verdeckstoff 1 befestigt ist.

### Bezugszeichenliste

- 1: Verdeckstoff
- 2: Scheibe
- 3: Stoffrand
- 4: Randabschnitt
- 5: Ausstanzung
- 6: Scheibenaußenseite
- 7: Abdeckung
- 8: Verdickung
- 9: Stoffoberseite
- 10: Scheibeninnenseite
- 11: Erhöhung
- 12: Verstärkungsrahmen
- 13: Einlegeteil
- 14: Befestigungsabschnitt
- 15: Scharnier
- 16: Profilteil
- 17: Innenhimmel
- 18: Naht
- 19: Befestigungseinrichtung
- 20: Reißverschlußhälfte
- 21: Reißverschlußhälfte
- 22: Naht
- 23: Dichtung
- 24: Stoffrahmen
- 25: Rahmen oder Aluprofil
- 26: Schenkel
- 27: Kederprofil
- 28: Dichtung
- 29: Nase
- 30: Profilelement
- 31: Clip
- 32: Vertiefung
- 33: Öffnung
- 34: Federblechklammer
- 35: Winkelprofilstreifen

## Patentansprüche

1. Verdeck eines Fahrzeuges mit einem Verdeckstoff und einer in einem Ausschnitt des Verdeckstoffes angeordneten Scheibe aus Kunststoff, **dadurch gekennzeichnet, daß** in einem Randbereich (4) der Scheibe (2) ein den Ausschnitt begrenzender Stoffrand (3) des Verdeckstoffes (1) oder eine mit dem Verdeckstoff (1) verbundene Befestigungseinrichtung (19) fest eingeformt ist.

2. Verdeck nach Anspruch 1, **dadurch gekennzeichnet, daß** die Scheibe (2) in einem Gieß- oder Spritzgußverfahren hergestellt ist und daß bei diesem Herstellungsverfahren der Stoffrand (3) bzw. die Befestigungseinrichtung (19) beim Herstellen der Scheibe (2) in diese eingebettet wird.

3. Verdeck nach Anspruch 1 oder 2, **dadurch gekennzeichnet, daß** die Scheibe (2), die insbesondere eine Heckscheibe ist, als feste oder als flexible Scheibe gebildet ist.

4. Verdeck nach einem der Ansprüche 1 bis 3, **dadurch gekennzeichnet, daß** der Randabschnitt (4) der Scheibe (2) verdickt gebildet ist.

5. Verdeck nach Anspruch 4, **dadurch gekennzeichnet, daß** die Verdickung (8) am Randabschnitt (4) der Scheibe (2) einseitig zur Scheibeninnenseite (10) oder zur Scheibenaußenseite (6) hin oder beidseitig gebildet ist.

6. Verdeck nach einem der Ansprüche 1 bis 5, **dadurch gekennzeichnet, daß** der Stoffrand (3) derart im Randbereich (4) der Scheibe (2) eingebettet ist, daß der Verdeckstoff (1) bündig zur Scheibenaußenseite (6), oberhalb der Scheibenaußenseite (6) oder von der Scheibenaußenseite (6) zurückgesetzt angeordnet ist.

7. Verdeck nach einem der Ansprüche 1 bis 6, **dadurch gekennzeichnet, daß** im Randbereich (4) der Scheibe (2) ein Verstärkungsrahmen (12) eingebettet ist.

8. Verdeck nach einem der Ansprüche 1 bis 7, **dadurch gekennzeichnet, daß** im Randbereich (4) der Scheibe (2) zumindest ein aus dem Randbereich (4) herausragendes Einlegeteil (13) eingebettet ist.

9. Verdeck nach Anspruch 8, **dadurch gekennzeichnet, daß** das Einlegeteil (13) als Rahmen gebildet ist.

10. Verdeck nach einem der Ansprüche 1 bis 9, **dadurch gekennzeichnet, daß** die Befestigungseinrichtung (19) ein Reißverschluß ist, dessen eine Hälfte (20) in der Scheibe (2) eingebettet ist und dessen andere Hälfte (21) mit dem Verdeckstoff (1) verbunden ist.

11. Verdeck nach einem der Ansprüche 1 bis 9, **dadurch gekennzeichnet, daß** die Befestigungseinrichtung (19) ein Rahmen und insbesondere ein Stoffrahmen (24) ist, an dem ein Reißverschluß (20, 21) befestigt ist.

12. Verdeck nach einem der Ansprüche 1 bis 9, **dadurch gekennzeichnet, daß** die Befestigungseinrichtung (19) ein Rahmen und insbesondere ein Metallrahmen ist, an dem der Verdeckstoff (1) befestigt ist.

13. Verdeck nach Anspruch 12, **dadurch gekennzeichnet, daß** der Verdeckstoff (1) an einem Kederprofil (27) befestigt ist, das an der Befestigungseinrichtung (19) angebracht ist.

14. Verdeck nach einem der Ansprüche 1 bis 9, **dadurch gekennzeichnet, daß** der Verdeckstoff (1) an einem Befestigungsclips (31) enthaltenden Profilelement (30) befestigt ist, das an der Befestigungseinrichtung (19) festlegbar ist.

15. Verdeck nach einem der Ansprüche 1 bis 9, **dadurch gekennzeichnet, daß** der Randabschnitt (4) der Scheibe (2) eine rinnenartige, insbesondere hinterschnittene Vertiefung (32) zur Aufnahme von Befestigungs-clips (31) aufweist.

16. Verdeck nach einem der Ansprüche 1-15, **dadurch gekennzeichnet, daß** die Scheibe (2) an einem 2-Komponenten-Spritzguß hergestellt ist, der zwei unterschiedliche Materialien oder zwei gleiche Materialien mit unterschiedlicher Färbung aufweist.

17. Verdeck nach einem der Ansprüche 1 bis 16, **dadurch gekennzeichnet, daß** das Verdeck ein Faltdach eines Cabriolets ist.

## Claims

1. A convertible top of a motor vehicle with a convertible top fabric and a plastic window which is located in a cut-out in the fabric of the top, **characterised in that** a fixing means (19) connected to the fabric (1) or a fabric edge (3) of the fabric (1) and defining the cut-out is rigidly and integrally moulded into an edge portion (4) of the window (2).

2. , A convertible top in accordance with Claim 1, **characterised in that** the window (2) is produced by an injection moulding or casting process and **in that**, in the case of this production method, the fabric edge (3) or fixing means (19) is embedded into the window (2) while this latter is being produced.

3. A convertible top according to Claim 1 or 2, **characterised in that** the window (2) which is particularly a rear window, is constructed as a fixed or flexible window.

4. A convertible top according to one of Claims 1 to 3, **characterised in that** the edge portion (4) of the window (2) is thickened.

5. A convertible top according to Claim 4, **characterised in that** the thickening (8) at the edge portion (4) of the window (2) is formed on one side, facing the interior (10) of the window or facing the outside (6) of the window or is formed on both sides.

6. A convertible top according to one of Claims 1 to 5, **characterised in that** the fabric edge (3) is so embedded in the edge portion (4) of the window (2) that the fabric (1) is disposed flush with the outside (6) of the window, above the outside (6) of the window or set back from the outside (6) of the window.

7. A convertible top according to one of Claims 1 to 6, **characterised in that** a reinforcing frame (12) is embedded in the edge portion (4) of the window (2).

8. A convertible top according to one of Claims 1 to 7, **characterised in that** at least one insertion part (13) which projects out from the edge portion (4) is embedded in the edge portion (4) of the window (2).

9. A convertible top according to Claim 8, **characterised in that** the insertion part (13) is constructed as a frame.

10. A convertible top according to one of Claims 1 to 9, **characterised in that** the fixing means (19) is a sliding clasp fastener of which one half (20) is embedded in the window (2) while its other half (21) is connected to the fabric (1).

11. A convertible top according to one of Claims 1 to 9, **characterised in that** the fixing means (19) is a frame and particularly a fabric frame (24) on which a sliding clasp fastener (20, 21) is fixed.

12. A convertible top according to one of Claims 1 to 9, **characterised in that** the fixing means (19) is a frame and in particular a metal frame on which the fabric (1) is fixed.

13. A convertible top according to Claim 12, **characterised in that** the fabric (1) is fixed to a weather strip section (27) which is mounted on the fixing means (19).

14. A convertible top according to one of Claims 1 to 9, **characterised in that** the fabric (1) is fixed to a profile element (30) containing a fixing clip (31) and which can be attached to the fixing means (19).

15. A convertible top according to one of Claims 1 to 9, **characterised in that** the edge portion (4) of the window (2) comprises a channel-like, particularly an under-cut depression (32) for accommodating fixing clips (31).

16. A convertible top according to one of Claims 1 to 15, **characterised in that** the window (2) is produced on a bicomponent injection moulding which comprises two different materials or two identical materials which are differently coloured.

17. A convertible top according to one of Claims 1 to 16, **characterised in that** the top is a folding roof of a convertible motor car.

## Revendications

1. Capote de véhicule, comprenant un matériau de recouvrement et un vitrage en matière plastique disposé dans une découpe dudit matériau de recouvrement, **caractérisée par le fait qu'**un bord (3) du matériau de recouvrement (1), délimitant la découpe, ou un dispositif de fixation (19) relié audit matériau de recouvrement (1), est intégré rigidement par moulage dans une région marginale (4) du vitrage (2).

2. Capote selon la revendication 1, **caractérisée par le fait que** le vitrage (2) est fabriqué selon un procédé de coulée ou de coulée par injection ; et **par le fait que**, lors de ce procédé de fabrication, le bord (3) du matériau ou le dispositif de fixation (19) est respectivement noyé dans le vitrage (2) au stade de la production de ce dernier.

3. Capote selon la revendication 1 ou 2, **caractérisée par le fait que** le vitrage (2), se présentant notamment comme une lunette arrière, est réalisé sous la forme d'un vitrage rigide ou flexible.

4. Capote selon l'une des revendications 1 à 3, **caractérisée par le fait que** le segment marginal (4) du vitrage (2) est de réalisation épaissie.

5. Capote selon la revendication 4, **caractérisée par le fait que** la zone épaissie (8), ménagée sur le segment marginal (4) du vitrage (2), est réalisée tournée d'un côté de la face interne (10) du vitrage ou de la face externe (6) dudit vitrage, ou bien des deux côtés.

6. Capote selon l'une des revendications 1 à 5, **caractérisée par le fait que** le bord (3) du matériau est noyé dans la région marginale (4) du vitrage (2), de façon telle que ledit matériau de recouvrement (1) vienne à fleur avec la face externe (6) du vitrage, soit disposé au-dessus de ladite face externe (6) du vitrage, ou soit agencé en retrait vis-à-vis de ladite face externe (6) du vitrage.

7. Capote selon l'une des revendications 1 à 6, **caractérisée par le fait qu'**un cadre de renforcement (12) est noyé dans la région marginale (4) du vitrage (2).

8. Capote selon l'une des revendications 1 à 7, **caractérisée par le fait qu'**au moins une pièce prisonnière (13), dépassant au-delà de la région marginale (4), est noyée dans ladite région marginale (4) du vitrage (2).

9. Capote selon la revendication 8, **caractérisée par le fait que** la pièce prisonnière (13) est réalisée sous la forme d'un cadre.

10. Capote selon l'une des revendications 1 à 9, **caractérisée par le fait que** le dispositif de fixation (19) est une fermeture à glissière dont une moitié (20) est noyée dans le vitrage (2), et dont l'autre moitié (21) est reliée au matériau de recouvrement (1).

11. Capote selon l'une des revendications I à 9, **caractérisée par le fait que** le dispositif de fixation (19) est un cadre et, en particulier, un cadre (24) en tissu auquel une fermeture à glissière (20, 21) est fixée.

12. Capote selon l'une des revendications 1 à 9, **caractérisée par le fait que** le dispositif de fixation (19) est un cadre et, en particulier, un cadre métallique auquel le matériau de recouvrement (1) est fixé.

13. Capote selon la revendication 12, **caractérisée par le fait que** le matériau de recouvrement (I) est fixé à un bourrelet profilé (27) implanté sur le dispositif de fixation (19).

14. Capote selon l'une des revendications 1 à 9, **caractérisée par le fait que** le matériau de recouvrement (1) est fixé à un élément profilé (30) comprenant des clips de fixation (31) et pouvant être verrouillé à demeure sur le dispositif de fixation (19).

15. Capote selon l'une des revendications 1 à 9, **caractérisée par le fait que** le segment marginal (4) du vitrage (2) présente un renfoncement (32) du type rigole, notamment contre-dépouillé, en vue de recevoir des clips de fixation (31).

16. Capote selon l'une des revendications 1-15, **caractérisée par le fait que** le vitrage (2) est venu de coulée par injection à deux composants, comprenant deux matériaux différents, ou deux matériaux identiques de colorations différentes.

17. Capote selon l'une des revendications 1 à 16, **caractérisée par le fait que** ladite capote est un toit repliable de cabriolet.
